# EUROPEAN PATENT SPECIFICATION

(11) **EP 0 744 489 B1**
(45) Date of publication and mention of the grant of the patent: **26.07.2006**
(21) Application number: 95120579.8
(22) Date of filing: 27.12.1995
(51) Int. Cl.: D06N 3/00, D04H 13/00, B32B 27/12

(54) **Composite product consisting of a leather-like microfibrous material and a polymer film, manufacturing process thereof and its use for the lining of thermoformed thermoplastic articles**
Verbundwerkstoff bestehend aus Kunstleder mit Mikrofasern und einem Kunststofffilm, das Herstellungsverfahren dazu und seine Verwendung zum Auskleiden von geformten Kunststoffartikeln
Stratifié constitué de cuir synthétique ayant des microfibres et d'un film polymérique, procédé pour sa fabrication et son utilisation pour des articles thermoplastiques moulés

(30) Priority: 21.05.1995 IT MI951058
(43) Date of publication of application: 27.11.1996
(73) Proprietor: ALCANTARA S.p.A., 20138 Milano (IT)
(72) Inventor: Ferraro, Cristofero, I-05100 Terni (IT); Foddai, Roberto, I-05100 Terni (IT)
(74) Representative: Cioni, Carlo

(56) References cited:
- EP-A- 0 584 511
- US-A- 5 277 969
- DATABASE WPI Week 7532 Derwent Publications Ltd., London, GB; AN 75-52877w XP002011341 & JP-A-730 016 292 (KURATAY KK)
- DATABASE WPI Week 8027 Derwent Publications Ltd., London, GB; AN 80-47203c XP002011342 & JP-A-55 067 444 (MEIWA SANGYO KK)
- DATABASE WPI Week 9249 Derwent Publications Ltd., London, GB; AN 92-403217 XP002011343 & JP-A-04 300 367 (TORAY IND. INC.)
- DATABASE WPI Week 9420 Derwent Publications Ltd., London, GB; AN 94-164517 XP002011344 & JP-A-06 108 368 (KURARAY CO. LTD.)
- DATABASE WPI Week 8340 Derwent Publications Ltd., London, GB; AN 83-779873 XP002011345 & JP-A-820 024 149 (KYOWA LEATHER CLOTH, TOYOTA MOTOR KK)
- DATABASE WPI Week 9420 Derwent Publications Ltd., London, GB; AN 94-163596 XP002011346 & JP-A-06 106 682 (KYOWA LEATHER CLOTH CO. LTD.)
- DATABASE WPI Week 8547 Derwent Publications Ltd., London, GB; AN 85-292419 XP002011347 & JP-A-60 199 986 (KURARAY KK)
- DATABASE WPI Week 9301 Derwent Publications Ltd., London, GB; AN 93-005150 XP002011348 & JP-A-04 333 674 (KURARAY CO. LTD.)
- DATABASE WPI Week 9443 Derwent Publications Ltd., London, GB; AN 94-346724 XP002011349 & JP-A-06 270 316 (KANEBUCHI KAGAKU KOGYO KK)

## Description

The present invention refers to a process for preparing composite rigid articles comprising microfibrous material lined to a polymer film.

Microfibrous material, generally comprising polyester or polyamide microfibres matrix are known in the art. Said materials have the appearance of the natural leather and some among these materials, namely the ones in which the polymer microfibrous non-woven material is immersed in a polymer matrix, preferably polyurethane, show "hand", lightweight, velour-like, fastness to light and nitrogen oxide characteristics better than the natural leather. Moreover those materials, thanks to its good characteristics constitutes a valuable product widely used in the garment industry, furniture manufacture, and interior decoration of vehicles, boats and other transportation equipment.

In order to be suitable for the use in the field of furniture manufacture and the vehicle interior decoration the microfibrous material can be lined to a cloth, knitted fabric or polystyrene foam providing the product with the required stiffness and mechanical strength. Such a lining is carried out by means of suitable adhesive or by flame heating as it is disclosed in GB-A-2 235 651 and GB-A-2 235 652 of the Applicant.

(D1) **US5277969** claims a process for preparing an imitation leather laminated material comprising the steps (1) impregnating polyester or polyamide microfibre felt of 0.05-0.80 denier with polyurethane-polyurea to give the polyurethanic base sheet having a final wt. of 140-400g/m2 and a density of 0.2-0.4g/cm3 after coagulating and drying steps and (2) bonding (a) with (b) comprising a substrate material(s). The resulting imitation leather microfibrous polyurethanic base sheet adhered to a functional substrate provides a smooth, soft leather substitute that can meet the physical requirements of demanding uses such as auto vehicle trimming.

(D5) **EP0584511** defines a synthetic microfibrous non-woven suede-type fabric with improved dyeing properties - comprising matrix impregnated with polyurethane contg. tert. amine units, the polyurethane elastomer thus obtained being used for impregnating a microfibrous substrate of nonwoven fabric.

A field in which the microfibrous, non-woven material could be widely used is the leather-good manufacturing industry by lining formed thermoplastic articles obtained by thermoformation. However the above mentioned microfibrous material lining technics used in the coupling with clothes and foamed polymeric material are poorly consistent with the thermoformed article production cycles and accordingly with its coupling. In fact the use of the above technics implies complex and lengthy operation steps affecting the economics of the production cycle.

As a matter of fact the forming or thermoforming process comprises heating a thermoplastic material plate up to its softening temperature, pressing it between a mold and a die to shape it in the desired form. It has been found that, if the heated plate is covered with the microfibrous material the resulting thermoformed article exhibits an insufficient adhesion microfibrous material - thermoplastic polymer.

It would be highly desirable to have available a microfibrous material able to be firmly lined to rigid thermoplastic articles in the course of its thermoforming.

It is an object of the present invention to provide a microfibrous composite material for lining thermoplastic rigid articles in the same time as its thermoforming.

It has been now found, and this is the first object of the invention, a product consisting of a microfibrous material and a polymer film that can be advantageously used to firmly coat thermoformed thermoplastic materials in the same time of its thermoforming.

A second object of the invention is a process that can be easily carried out to manufacture the above composite product.

It has to be consider within the scope of the present invention a thermoforming process suitable to manufacture rigid thermoplastic material formed articles using a microfibrous material-polymer composite, as well as the coated rigid thermoplastic materials resulting from the above process.

The composite material according to the invention can be obtained by heat sealing microfibrous material to the polymer film. The operation can be advantageously effected in continuous by using roller hot-press systems after having heated the backside of microfibrous non-woven material with an I.R. lamp.

The coupling operation temperature is preferably in the range 80 to 150°C. The temperature will be typically selected close to the softening temperature of the film polymer. When operating in continuous the composite delivery rate will be preferably in the range 1.5 to 4.0 m/min.

Preferably the coupling operation will take place under a hot roller clearance of 0 to 0.7mm.

Microfibrous material useful to carry out the process of the present invention consisting of a microfibrous non-woven fabric immersed into a polymer matrix, are known in the art. On this respect reference can be made to the Italian Patents 823,055, 921,871, 839,921, 858,337, 905,222, and 873,699. Additional microfibrous, non-woven material manufacturing processes are disclosed in the Italian patent applications MI92A00239, MI92001945, MI92002944, MI92002942 and MI92001952 of the Applicant.

Even if in the course of the present description reference will be specifically made to the use of microfibrous non-woven material immersed in a polyurethane matrix, the present invention is not limited to or by this component. Other microfibrous leather-like material can be used to line thermoformed thermoplastic articles in the same time as the thermoforming operations thereof; on this respect reference can be made to microfibrous materials disclosed in Italian patent 1,085,966.

Further leather-like microfibrous materials useful in the process according to the invention comprise non-woven fabric structure formed by different section or size microfibres on a woven or knitted carrier.

Additionally included within the scope of the invention are composites consisting of polymer film and a microfibrous material in which round or non round cross section microfibres form a woven on knitted fabric and the resulting product is submitted to raising process to impart the suede-like appearance.

The microfibrous non-woven materials particularly suitable according to the invention are the ones whose matrix consists of a polymer selected among polyurethanes and derivatives thereof, the microfibres consisting of polyester (f.i. polyethylenterephthalate), polyamide, (f.i. nylon 6, nylon 66, nylon 12), polyolefins (f.i. polyethylene, polypropylene) polyacrylonitrile and copolymer thereof

The composite forming polymer film may be:
- Polyether, and/or polyester and/or copolyester mainly based polyurethane;
- Low melting point polyester;
- Polyolefins, as polyethylene or polypropylene;
- Low melting point polyamide.

According to a preferred embodiment of the invention, the polymer film is coated with a protective layer of a high melting point polymer material, e.g. polyethylene, polypropylene or polyvinylchloride; such protective coating being removed before the thermoforming operation.

The thermoforming operations to manufacture the microfibrous, non-woven lined article, using the composite material according to the invention, take very short time, in the order of magnitude of 2 minutes, at a temperature ranging from 140 to 250°C. It is preferable first to heat the thermoplastic material plate up to its softening temperature then superimposing thereupon the microfibrous non-woven material/polymer film and thermoforming the resulting structure.

The invention will now be illustrated in detail with reference to the following examples which are not to be intended as a limitation of the invention.

### Example I

A microfibrous felt has been prepared in accordance with the following known procedure:

The fiber was formed by 57 parts by weight of polyethyleneterephthalate, 40 parts in weight of polystyrene polymer and 3 parts by weight of polyethyleneglycol. The 3.8 den. extruded fiber revealed a 16 polyester microfiber content; each microfiber being approximately 0.10 - 0.11 den.

The fiber was submitted to punching to yield an intermediate felt of 0.195g/cm³ density and 540g/m² weight.

The intermediate felt was immersed into a 20% polyvinyl alcohol water solution, dried and treated with perchloroethylene to remove the polystyrene matrix obtaining a polyvinylalcohol matrix containing fiber. Polyurethane was prepared separately by reacting 4,4' diphenyl-methane - diisocyanate (MDI)(2 mmole) with 1 mole of a mixture of polytetrahydrofurane (PTHF)(molecular weight 1976) and polycaprolacton (PCL) (molecular weight 1958) in a molar ratio 3:1 at 65°C for a period of 3 hours. The resulting prepolymer was dissolved in dimethylformamide to yield a 25% (weight) solution.

A 25% (weight) dimethylformamide (DMF) solution of 4,4'- diaminophenyl - methane (DAPM) (0.825 mole) and n-dibutylamine (DBA) 0.175 mole) was prepared and added to the diluted prepolymer at 65°C:

The solution was reacted for approximately 30 hours until the concentration reached the value of 25% by weight and the solution was free from NCO groups. The resulting polyurethane solution exhibits a viscosity of approximately 20,000 cps at 20°C.

Polyurethane solution was diluted with DMF to obtain a 13% by weight solution, then the polyethylene terephthalate/polyvinyl alcohol felt prepared as described above was immersed into the polyurethane solution. The excess polyurethane was removed by passing the impregnated felt through squeezing rollers; polyurethane was then coagulated by pouring it in water to remove polyvinyl alcohol.

After the above treatment the product was dried. The resulting material consists of 68±3% by weight of microfiber and 32±3% by weight of polyurethane. The product sliced lengthwise in sheets 10mm thick was submitted to abrasion to impart the suede-like appearance.

### Example 2

The procedure of Example 1 was repeated with the exception that the 25% by weight prepolymer in dimethyl formamide solution was reacted instead of DAPM with 1.65 mole of water containing 0.175 mole of n-butylamine. The extension reaction was carried out at 65°c for 6 hours. Resulting polyurethane average molecular weight was such as to impart to a 25% by weight dimethylformamide solution at a temperature of 20°C a viscosity of 20,000 cps.

### Example 3

The procedure of Example 1 was repeated with the exception that the fiber was prepared from a flame-retardant polyethylene terephthalate (FIDION SR marketed by ENICHEM FIBRE S.p.A.

### Example 4

The procedure of Example 1 was repeated with the exception that nylon 6 microfibers were used instead of polyethylene terephtalate and a styrene-acrylonitrile copolymer (marketed under the trade name SUN) was employed instead of polystyrene.

### Example 5

A product similar to Example 1 was prepared by using 4,4'dicyclohexyl methane instead of MDI and 4,4'methylene bis (2,6 diisopropylaniline) instead of DAMP.

### Example 6

A product was prepared according to the procedure of Example 1 using nylon 6 instead of polyethylene terephthalate. Polyurethane was prepared according to example 5.

### Example 7

Microfibrous material prepared according to Example 1 was coupled with polyester based and polyether based polyurethane films. Composite products have been prepared by microfibrous material backside heating with a I.R. lamp. Microfibrous non-woven material and polymer films have been passed through a couple of rollers to improve the adhesion.

### Example 8

Following the procedure of example 7 composites have been prepared comprising the microfibrous non-woven material manufactured according to Example 1 and low melting polyethylene or polypropylene films.

### Example 9

Following the procedure of example 7 composites have been prepared comprising the microfibrous non-woven material manufactured according to Example 6 and polyester or polyether based polyurethane films.

### Example 10

The microfibrous product consists of round elliptic cross-section having a diameter size varying around a mean value of 2 µ, the effective size ranging from 0,5 to 3,5 µ.

The microfibres immersed in a polyester matrix, are made of nylon 6. The average microfibre count was 0,01 den.

The above microfibrous product was coupled with films according to the procedures of the examples 7, 8 and 9.

### Example 11

The microfibrous product consists of a woven or knitted fabric inserted into a non-woven structure and immersed into polyurethane matrix.

The microfibrous product was coupled with films described in examples 7, 8 and 9.

### Example 12

The microfibrous product consists of isosceles triangle cross-section microfibres included into a woven or knitted structure. The suede like appearance is obtained by a conventional raising process.

Said microfibrous product was coupled with films described in examples 7, 8 and 9.

### Example 13

Following the procedure of the preceding examples, composites have been prepared comprising the microfibrous non-woven material manufactured according to Example 4 and polyester or polyether based polyurethane films.

### Example 14

Following the procedure of the preceding examples, flame retarding composites have been prepared comprising the microfibrous non-woven material manufactured according to Example 3 and polyester or polyether based polyurethane films.

### Example 15

Following the procedure of Example 7, a composite has been prepared comprising the microfibrous non-woven material manufactured according to Example 6 and a low melting polyolefin film.

### Example 16

Following the procedure of Example 7, a composite has been prepared comprising the microfibrous non-woven material manufactured according to Example 4 and a low melting polyolefin film.

### Example 17

Following the procedure of the preceding examples, a flame retarding composite has been prepared comprising the microfibrous non-woven material manufactured according to Example 3 and a low melting polyolefin film.

### Example 18

ABS thermoplastic material plate surface was heated up to the starting softening temperature thereof (195°C). A composite layer manufactured in accordance with example 7, after removal of the protective layer, was superimposed to the heated plate and the resulting structure was submitted to thermoforming in an apparatus provided with mold and die to shape the plate-composite structure in form of suitcase shell. The resulting product, after cooling, exhibits a perfect adhesion composite-ABS substrate.

### Examples 19-28

The lining of thermoformed ABS plates was repeated using the composites manufactured according to examples 8 to 17. In all cases a perfect adhesion composite/ABS was obtained, without any surface modification of the microfibrous material.

## Claims

1. A process for preparing rigid thermoplastic articles coated with microfibrous non-woven material of the leather-like type, said process comprising the following steps:
(i) superimposing a composite microfibrous non-woven material / polymer film to a thermoplastic material heated up to its softening temperature, said microfibrous non-woven material consisting of microfibres dispersed in polyurethane, said microfibres being selected from the group consisting of polyethylene therephthalate, flame retardant polyethylene therephthalate, nylon 6; said polymer film being selected from the group consisting of :
** polyurethane mainly based on polyester or polyether or copolyester;
** Low melting point polyester;
** Low melting point polyolefins as polyethylene or polypropylene;
** Low melting point polyamides;
(ii) submitting the resulting product from (i) to shape by thermoforming in an apparatus provided with mold and die.

2. A process according to claim 1, **characterized in that** the thermoforming temperature is from 140°C to 250°C.

3. A process according to claim 1, **characterized in that** the thermoforming takes place within a period of time of the order of few minutes.

4. A process according to claim 1, wherein the composite microfibrous non-woven material /polymer film is prepared at a temperature from 80°C to 150°C, and is close to the softening temperature of the polymer film.

5. A process according to claim 4, wherein the composite microfibrous non-woven material /polymer film is prepared in continuous using roller hot-press system, after having heated backside the microfibrous material with I.R. lamps.

6. A process according to claim 5, wherein the composite material is prepared in continuous and the composite delivery rate is in the range from 1.5 to 4.0 m/min.

7. A process according to claim 6, wherein the composite material is prepared under a hot roller clearance of 0 to 0.7 mm.

8. A process according to claim 1, wherein the thermoplastic material is a ABS terpolymer.

9. A process according to claim 1, wherein the rigid thermoplastic articles coated with microfibrous non-woven material of the leather-like type are prepared in continuous using both roller hot-press system for composite microfibrous non-woven material / polymer film preparation and apparatus provided with mold and die for thermoforming.

## Patentansprüche

1. Verfahren zur Herstellung steifer, thermoplastischer Gegenstände, die mit einem lederartigen, nicht-gewobenen Mikrofasermaterial überzogen sind, wobei das Verfahren die folgenden Schritte umfasst:
(i) Aufbringen eines Verbundwerkstoffs aus einem nicht-gewobenen Mikrofasermaterial/Polymerfilm auf ein thermoplastisches Material, das auf dessen Erweichungstemperatur erwärmt wurde, wobei das nicht-gewobene Mikrofasermaterial aus in Polyurethan dispergierten Mikrofasern besteht, die Mikrofasern aus der Gruppe bestehend aus Polyethylentherephthalat, flammenhemmendem Polyethlenterephthalat und Nylon 6 ausgewählt ist; der Polymerfilm ausgewählt ist aus der Gruppe bestehend aus:
- Polyurethan, das hauptsächlich auf Polyester oder Polyether oder Copolyester basiert;
- Polyester mit niedrigem Schmelzpunkt;
- Polyolefinen mit niedrigem Schmelzpunkt, wie Polyethylen oder Polypropylen;
- Polyamiden mit niedrigem Schmelzpunkt;
(ii) Unterziehen des aus (i) erhaltenen Produkts der Formgebung mittels Thermoformen in einem mit einer Pressform und einem Formwerkzeug versehenen Gerät.

2. Verfahren nach Anspruch 1, **dadurch gekennzeichnet, dass** die Thermoformtemperatur von 140°C bis 250°C beträgt.

3. Verfahren nach Anspruch 1, **dadurch gekennzeichnet, dass** das Thermoformen innerhalb einer Zeitspanne in der Größenordnung von einigen Minuten stattfindet.

4. Verfahren nach Anspruch 1, wobei der Verbundwerkstoff aus einem nicht-gewobenen Mikrofasermaterial/Polymerfilm bei einer Temperatur von 80°C bis 150°C hergestellt wird und nahe an der Erweichungstemperatur des Polymerfilms ist.

5. Verfahren nach Anspruch 4, wobei der Verbundwerkstoff aus einem nicht-gewobenen Mikrofasermaterial/Polymerfilm kontinuierlich unter Verwendung eines Heißpress-Rollensystems hergestellt wird, nachdem die Rückseite des Mikrofasermaterials mit IR-Lampen erwärmt wurde.

6. Verfahren nach Anspruch 5, wobei der Verbundwerkstoff kontinuierlich hergestellt wird und die Zuführrate des Verbundwerkstoffs im Bereich von 1,5 bis 4,0 m/min liegt.

7. Verfahren nach Anspruch 6, wobei der Verbundwerkstoff unter einem Heißrollenabstand von 0 bis 0,7 mm hergestellt wird.

8. Verfahren nach Anspruch 1, wobei das thermoplastische Material ein ABS-Terpolymer ist.

9. Verfahren nach Anspruch 1, wobei die steifen, thermoplastischen Gegenstände, die mit einem lederartigen, nicht-gewobenen Mikrofasermaterial überzogen sind, kontinuierlich unter Verwendung eines Heißpress-Rollensystems zur Herstellung eines Verbundwerkstoffs aus einem nicht-gewobenen Mikrofasermaterial/Polymerfilm als auch eines mit einer Pressform und einem Formwerkzeug versehenen Geräts zum Thermoformen hergestellt werden.

## Revendications

1. Procédé de préparation d'articles rigides en matière thermoplastique revêtus d'une matière non-tissée en microfibres de type cuir synthétique, ledit procédé comprenant les étapes suivantes :
(i) surimpression d'une matière non-tissée composite en microfibres / d'un film polymère sur une matière thermoplastique chauffée jusqu'à sa température de ramollissement, ladite matière non-tissée en microfibres consistant en des microfibres dispersées dans du polyuréthane, lesdites microfibres étant choisies parmi le groupe du polyéthylène téréphtalate, du polyéthylène téréphtalate ignifuge, du nylon 6 ; ledit film polymère étant choisi parmi le groupe comportant :
- du polyuréthane principalement à base de polyester, de polyéther ou de copolyester ;
- du polyester à faible point de fusion ;
- des polyoléfines à faible point de fusion telles que du polyéthylène ou du polypropylène ;
- des polyamides à faible point de fusion ;
(ii) conformation du produit résultant de l'étape (i) par thermoformage dans un dispositif comportant un moule et une matrice.

2. Procédé selon la revendication 1, **caractérisé en ce que** la température de thermoformage est comprise entre 140°C et 250°C.

3. Procédé selon la revendication 1, **caractérisé en ce que** le thermoformage a lieu pendant une durée de l'ordre de quelques minutes.

4. Procédé selon la revendication 1, dans lequel la matière non-tissée composite en microfibres /le film polymère est préparé(e) à une température comprise entre 80°C et 150°C, et est proche de la température de ramollissement du film polymère.

5. Procédé selon la revendication 4, dans lequel la matière non-tissée composite en microfibres /le film polymère est préparé(e) en continu en utilisant un dispositif de presse à chaud à rouleau, après avoir chauffé la sous-face de la matière en microfibres avec des lampes infrarouges.

6. Procédé selon la revendication 5, dans lequel la matière composite est préparée en continu et dans lequel le débit du composite est compris entre 1,5 et 4,0 mètres par minute.

7. Procédé selon la revendication 6, dans lequel la matière composite est préparée sous une garde par rapport aux cylindres comprise entre 0 et 0,7 mm.

8. Procédé selon la revendication 1, dans lequel la matière thermoplastique est un terpolymère à base d'acrylonitrile-butadiène-styrène.

9. Procédé selon la revendication 1, dans lequel les articles thermoplastiques rigides revêtus d'une matière non-tissée en microfibres de type cuir synthétique sont préparés en continu en utilisant à la fois un dispositif de presse à chaud à rouleau pour la préparation de la matière non-tissée composite en microfibres / du film polymère et un dispositif comportant un moule et une matrice pour le thermoformage.
